# EUROPÄISCHE PATENTSCHRIFT

(11) **EP 4 047 135 B1**
(45) Veröffentlichungstag und Bekanntmachung des Hinweises auf die Patenterteilung: **31.01.2024**
(21) Anmeldenummer: 21158181.4
(22) Anmeldetag: 19.02.2021
(51) Int. Cl.: E02B 5/08, E02B 8/08

(54) **FISCHPASS FÜR EINE TALSPERRE**
FISHWAY FOR A DAM
PASSE À POISSONS POUR UN BARRAGE

(43) Veröffentlichungstag der Anmeldung: 24.08.2022
(73) Patentinhaber: Peters Ökofisch GmbH & Co. KG, 37671 Höxter (DE)
(72) Erfinder: Peters, Hans Wilhelm, 33014 Bad Driburg (DE)
(74) Vertreter: Wickord, Wiro

(56) Entgegenhaltungen:
- EP-A1- 1 644 586
- EP-A2- 1 132 524
- EP-A2- 2 098 640

## Beschreibung

Die Erfindung betrifft einen Fischpass zur Überwindung einer Stauhöhe an einer Sperrmauer einer Talsperre mit einem oberseitigen Wasser-Zulauf und einem unterseitigen Wasser-Ablauf. Der Fischpass ist aufgeteilt in einen wasserseitigen Turmfischpass und luftseitig mindestens einen weiteren Turmfischpass, wobei der wasserseitige Turmfischpass mit dem luftseitigen Turmfischpass über einen Rohrquerstollen durch die Sperrmauer und ein Aquädukt verbunden ist.

Ein Fischpass nach den Forderungen der europäischen Wasserrahmenrichtlinie ist bisher nirgendwo realisiert worden, da die bisher bekannten Fischpässe keinen vollständigen Durchgang für den Abstieg der katadromen Wanderfische zum Salzwasser bieten. Die gesamte katadrome Langdistanz-Fauna wird bei zunehmendem Wasserstand und zu bestimmten Zeiten zum Wandern stimuliert und dies wird durch die Sperrmauern gestoppt. Über die Überflutungskanten werden diese Fische, wie auch bei Wasserfällen, niemals schwimmen, da das druckempfindliche Seitenlinienorgan davor warnt. Darauf sind die Fische in der Evolution geprägt worden. Daher kann sich die eingesperrte Fischfauna in Talsperren nicht regenerieren (Bastardisierung).

Dies stellt ein besonders großes Problem für adulte Aale dar, die sich am Grund eines Obergewässers vor der Sperrmauer einfinden. Sie steigen nicht bis zur Höhe eines Einlaufs in einen Fischpass auf und suchen vergeblich einen Abstieg hin zum Laichgebiet im Sargassosee. Sie versuchen durch die engen Lamellen der Rechenanlagen hindurchzukommen und werden von den Querstangen der Rechenanlagen durch die Putzbalken der Reinigungsanlagen tödlich abgequetscht. Fische wie Lachssmolts haben hier ebenfalls keine Chance. Sie bevorzugen die mittleren bis litoralen Wasserschichten und benutzen bei ihrem katadromen Abstieg zu den Fresswiesen im Meer die Einstiege in den Turmfischpass.

In vielen Gewässern werden von den Fischereipächtern eine große Anzahl von Jungaalen (Glasaalen) ausgesetzt. Diese wachsen in den Gewässern heran und wenn sie geschlechtsreif sind, setzt der Wanderungstrieb ein. Die katadromen Aale sind nun durch die Sperrwerke nicht in der Lage, diesem Wanderungstrieb nachzukommen. Fischereipächter und auch Umweltverbände europaweit sehen es als ein großes Problem, dass die Sperrmauern die natürliche Durchgängigkeit für Aale und weitere anadrome und katadrome Fischfauna unmöglich machen und suchen dringend nach einer Lösung für dieses Problem. Wenn der Stausee für den Lachs erreichbar würde, wäre dieser als Holdingpool zur Laichentwicklung ideal.

Ein Fischpass zur Überwindung einer Stauhöhe an einer Sperrmauer mit einem oberseitigen Wasser-Zulauf und einem unterseitigen Wasser-Ablauf ist aus der Patentschrift DE 103 31 596 B4 in mehreren Varianten bekannt. Die dort bekanntgemachten Fischpässe sind für den Auf- und Abstieg der meisten Fischarten bestens geeignet, da sie strömungstechnisch optimiert und besonders an die Physiologie der Fische angepasst sind. Das wurde bei vielen realisierten Fischpässen an Querbauten mit einer großen Zahl von Fischarten erfolgreich nachgewiesen. Der bekannte Fischpass wurde mit mehreren Preisen ausgezeichnet. Der Erfinder hat die bisher noch bekannten Probleme empirisch bearbeitet und hat die hier vorgeschlagenen Erweiterungen auf ihre Wirksamkeit überprüft.

Es ist die Aufgabe dieser Erfindung, einen Fischpass vorzuschlagen, der für verschiedene Wasserstände im Stausee optimiert ist und der die Durchgängigkeit von Stauhöhen auch für die bisher vernachlässigte katadrome und anadrome Fischfauna ermöglicht und damit das größte fischökologische Defizit von Talsperren behebt.

Diese Aufgabe wird durch die Merkmale des Anspruchs 1 gelöst. Vorteilhafte Ausgestaltungen der Erfindung sind in den Unteransprüchen angegeben.

Der erfindungsgemäße Fischpass dient zur Überwindung einer Stauhöhe an einer Sperrmauer einer Talsperre mit einem oberseitigen Wasser-Zulauf und einem unterseitigen Wasser-Ablauf und mit dazwischen liegenden, im Wesentlichen in einer Gefällerichtung hintereinander wechselseitig angeordneten Becken, die zusammen eine oder mehrere wasserdurchgängige, mäanderförmige Passagen mit Durchflussschlitzen bilden. Dabei sind die Passagen wendelförmig in einem wasserseitigen Turm angeordnet. Zu verschiedenen Höhen der Wendel sind jeweils zwei Öffnungen mit Ventilen, die miteinander über eine Regelung kommunizieren, vorhanden und es sind auf Befehl der Regelung bei jedem Wasserstand, bis auf den niedrigsten Niederwasserstand, bei dem kein Fischwechsel mehr stattfindet, diese Ventile so ausgleichend geregelt, dass die gewünschte Durchflussmenge durch den Fischpass erreicht wird. Die darunterliegenden Öffnungen sind jeweils durch das zugehörige Ventil verschlossen. An der untersten Passage ist ein Rohrstollen angeschlossen, der durch die Sperrmauer mit einem Aquädukt zu einem oder mehreren hintereinander angeordneten Turm-Fischpässen auf der Luftseite der Sperrmauer führt. Aus dem untersten Turmfischpass wird das abfließende Wasser des Fischpasses bis in das Unterwasser geführt.

Die Erfindung zeichnet sich dadurch aus, dass von dem Grund des Oberwassers vor der Sperrmauer ein Saugrohr Wasser zu einem Kontrollbecken in der untersten Passage des wasserseitigen Turms führt, und dieses Wasser weiter durch ein Abstiegsrohr im Rohrstollen und dem Aquädukt zu den luftseitigen Fischpässen und parallel zu deren Passagen bis in das Unterwasser führt. Dabei ist die durch das Abstiegsrohr fließende Wassermenge durch einen Schieber vor dem Kontrollbecken so geregelt, dass das Abstiegsrohr bei allen vorkommenden Wasserständen des Oberwassers nicht vollständig mit Wasser gefüllt ist und ein gleichbleibendes Strömungsregime für die abwandernde katadrome Fauna gewährleistet ist. Die aus dem Abstiegsrohr abfließende Menge an Wasser ist hier als Zusatzdotation für den Mäanderfischpass sinnvoll, da der Einstieg in den Fischpass noch besser gefunden wird.

Durch die Druckdifferenz des Wassers zwischen dem Grund des Stausees und dem untersten Niveau des wasserseitigen Turmes entsteht vor dem unteren Ende des Saugrohrs ein Sog, der von den katadromen Aalen über ihr Seitenlinienorgan wahrgenommen wird und sie daher in das Saugrohr einschwimmen und durch den entsprechend geöffneten Schieber in das Kontrollbecken gelangen. Die katadromen Lachssmolts benutzen für den Abstieg ins Meer den normalen Mäanderfischpass.

Mittels des Schiebers wird die Wassermenge im Abstiegsrohr so geregelt, dass dieses nicht ganz gefüllt ist, und es bildet sich in dem Abstiegsrohr eine gleichmäßige Strömung aus. Diese leitet die katadromen Fische, insbesondere Aale, bis in das Unterwasser des Stausees.

Auf diese Weise wird das drängende Problem gelöst, auch für die katadromen Aale den Abstieg aus einem Stausee zu ermöglichen und somit die Durchgängigkeit des Gewässers für alle auf- und absteigenden Fische zu gewährleisten.

Die Wassermenge in dem Abstiegsrohr kann damit dadurch geregelt werden, dass der Schieber mittels eines Reglers durch die Differenz des Wasserdrucks in einem senkrechten Schaurohr, das an das Saugrohr angeschlossen ist, und dem Druck des Wasserstands des Oberwassers geregelt wird. Es zeigen sich nur geringe Druckdifferenzen, die aber eine präzise Regelung der Schieberöffnung ermöglichen. Sollte die Regelung aufgrund von Störungen oder Stromunterbrechung ausfallen, schließt sich der Schieber durch eine Notfallkonfiguration automatisch vollständig. So kann der wasserseitige Turm nicht durch das Saugrohr mit Wasser volllaufen.

Vorteilhaft sind der Schieber und das Kontrollbecken auf dem Boden des wasserseitigen Turms eingebaut und können somit bei allen Wasserständen des Oberwassers ihre Funktion erfüllen.

Das Schaurohr ist an das Saugrohr in der Nähe des Schiebers angebracht und steht senkrecht im wasserseitigen Turm. In ihm steigt der Wasserstand entsprechend dem

Druck im Saugrohr auf. Es ist durchsichtig und somit ist der Wasserdruck im Schaurohr vom Treppenhaus des Turms her optisch überprüfbar.

Es ist wichtig, dass die Querschnitte des Saugrohres und des Abstiegsrohres so gewählt sind, dass auch bei einem höchsten Wasserstand im Stausee der Schieber so weit geöffnet bleibt, dass rückwandernde adulte Aale ihn passieren können. Der Querschnitt des Abstiegsrohres ist typischerweise größer als der Querschnitt des Saugrohres. So kann auch bei voll geöffnetem Saugrohr das gleichbleibende Strömungsregime im Abstiegsrohr gewährleistet werden.

Günstigerweise liegt das Abstiegsrohr auf dem Grund des Rohrstollens und des Aquäduktes. Darüber befindet sich eine Benthosschicht, die ein künstliches Interstitial bildet und das Wandern, vor allem von Aalen und Lachssmolts, beflügelt, die sich am Populationsüberschuss der benthischen Fauna gern bedienen.

Auf einfache Weise ist das Abstiegsrohr auf der Luftseite der Sperrmauer unter den Passagen der luftseitigen Fischpässe geführt. Es verringert sich damit nicht die im Fischpass geführte Wassermenge. Die katadromen Fische werden in der gleichmäßigen Strömung des Abstiegsrohrs geführt. Sie befinden sich damit in einem fischfreundlichen Strömungsregime. Es werden eine gleichbleibende Fließgeschwindigkeit und Wasserdruck gewährleistet.

Das Abstiegsrohr endet auf dem Grund des Unterwassers und die Aal- und Lachssmolts können das Gewässer weiter zu ihren Zielorten hinunter schwimmen.

Die Wendelpassagen der Türme können auf mehrere Arten ausgeführt sein. Eine vorteilhafte Bauweise ist ein spiralförmiger Mäanderfischpass, wie er in den Figuren weiter ausgeführt ist. Dabei kann der Turm selbst rund oder rechteckig ausgeführt sein. Die Mäanderfischpässe entsprechen den Forderungen des Tierschutzgesetzes, da sich darin keine Fischart verletzt.

Der Fischpass für eine Talsperre wird anhand der Figuren weiter erläutert. Dabei zeigen:
- Fig. 1.: eine Draufsicht auf die Sperrmauer der Talsperre mit den zu dem Fischpass zugehörigen Türmen;
- Fig. 2: einen senkrechten Querschnitt durch die Sperrmauer mit den zu dem Fischpass zugehörigen Türmen;
- Fig. 3: eine Schemazeichnung zur Funktionsweise des Aalabstiegs;
- Fig. 4: einen Querschnitt durch einen Rohrstollen;
- Fig. 5: eine Schrägansicht durch einen Aquädukt;
- Fig. 6: die Verbindung von dem Rohrstollen zu dem Aquädukt;
- Fig: 7: das Ende des Abstiegsrohrs im Unterwasser;
- Fig. 8: einen waagerechten Querschnitt durch einen rechteckigen wasserseitigen Turm;
- Fig. 9: einen waagerechten Querschnitt durch einen runden wasserseitigen Turm;
- Fig. 10: einen waagerechten Querschnitt durch einen rechteckigen luftseitigen Turm;
- Fig. 11: einen waagerechten Querschnitt durch einen runden luftseitigen Turm.

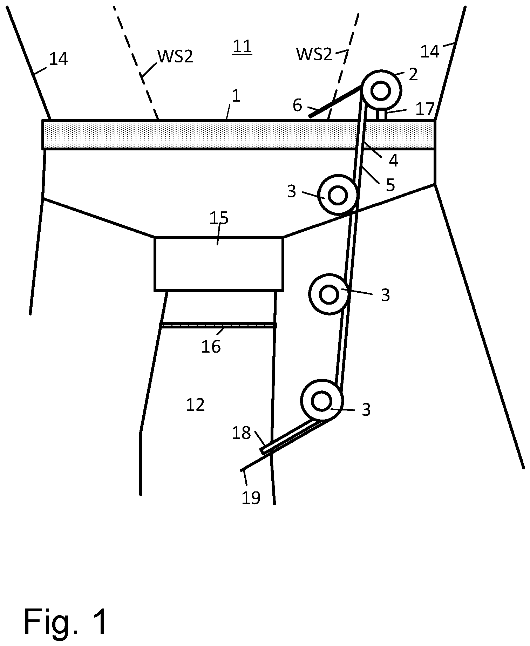

In Fig. 1 ist eine Draufsicht auf die Sperrmauer 1 der Talsperre mit dem zu dem Fischpass zugehörigen wasserseitigen Turm 2 und den luftseitigen Türmen 3 dargestellt. Vor der Sperrmauer 1 befindet sich ein Kraftwerk 15 mit seiner Rechenanlage 16, die durch den Fischpass umgangen werden.

Der wasserseitige Turm 2 steht nahe der Sperrmauer 1 zwischen der Uferlinie 14 und dem niedrigsten Wasserstand WS2 im Oberwasser 11 und ist über den Turmzugang 17 mit der Sperrmauer 1 verbunden. Die Verbindung zwischen dem wasserseitigen Turm 2 und dem ersten luftseitigen Turm 3 erfolgt über den Rohrstollen 4 und den Aquädukt 5. Weitere luftseitige Türme 3 können sich anschließen, um größere Höhenunterschiede ausgleichen zu können. Am letzten luftseitigen Turm 3 schließt sich der Auslauffischpass 18 an, der im Unterwasser 12 endet. Alle Fischpässe in den Türmen, in den Aquädukten 5 und im Auslauffischpass 18 sind in Mäandertechnologie ausgeführt.

Am wasserseitigen Turm 2 ist das Saugrohr 6 angeschlossen, das bis an den Grund vor die Sperrmauer 1 reicht. Hier haben sich die adulten Aale eingefunden und werden durch die Saugwirkung des Saugrohrs angezogen. Sie folgen dem Saugrohr und gelangen durch das Abstiegsrohr, dessen Ende 19 bis in den Grund des Unterwassers 12 reicht, in das Unterwasser 12 und können von hier weiter zu ihren Zielorten schwimmen.

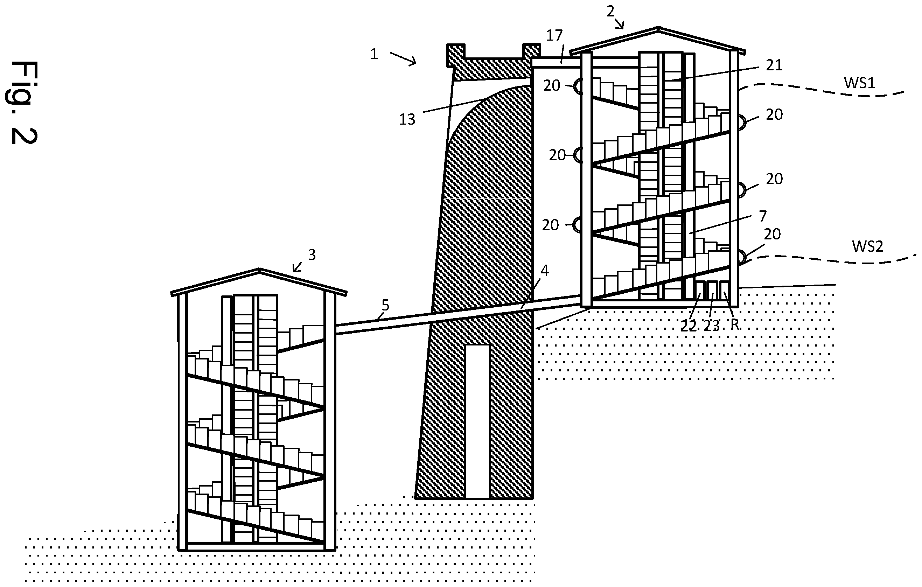

Fig. 2 zeigt einen senkrechten Querschnitt durch die Sperrmauer 1, den wasserseitigen Turm 2 und einen luftseitigen Turm 3. Von der Krone der Sperrmauer 1 führt der Zugang 17 zum oberen Ende des Treppenhauses 21 des wasserseitigen Turms 2. Der Zugang 17 liegt oberhalb des höchsten Wasserstandes WS1 des Stausees. Noch höhere Wasserstände werden über den Hochwasserüberlauf 13 abgeleitet.

Der Fischpass in dem wasserseitigen Turm 2 ist in spiralförmigen Passagen in Mäandertechnologie aufgebaut. Der Zufluss und damit auch der Fischzugang erfolgt über Ventile 20, die entsprechend dem jeweiligen Wasserstand so geöffnet sind, dass in dem Fischpass die gewünschte Durchflussmenge fließt. Dieses Wasser fließt weiter in dem Rohrstollen 4 durch die Sperrmauer 1 und dem Aquädukt 5 zu dem luftseitigen Turm 3, der in gleicher Mäandertechnologie wie der wasserseitige Turm 2 aufgebaut ist.

In dem wasserseitigen Turm 2 ist das durchsichtige Schaurohr 7 neben dem Treppenhaus 21 angebracht, so dass der Wasserdruck im Inneren des Turms 2 optisch beobachtet werden kann. Auf dem Boden des wasserseitigen Turms 2 sind die Aufstiegskontrolle 22, die Abstiegskontrolle 23 und die zugehörige Regeleinheit R untergebracht. Diese Einrichtungen sind damit immer im geschützten Raum zugänglich.

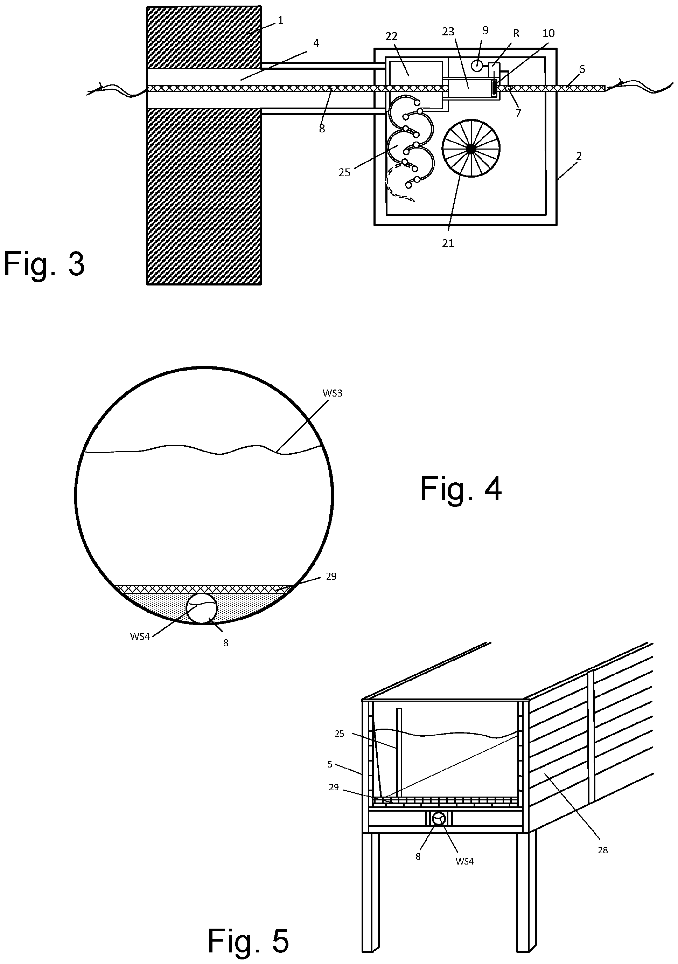

Fig. 3 zeigt das Schema der Abstiegseinrichtung für die katadromen Fische. Das Saugrohr 6 reicht bis an den Grund des Stausees und besitzt somit einen Druck der der Höhendifferenz vom Grund des Stausees und dem unteren Boden des wasserseitigen Turms 2 entspricht. Nach dem Heberprinzip entsteht damit eine Saugwirkung vor dem Eingang des Saugrohrs 6, dass die katadromen Aale anzieht. Lachssmolts schwimmen im litoralen Bereich direkt in den Turmfischpass.

Die in die Abstiegskontrolle 23 gelangende Wassermenge wird mittels des Reglers R und des Schiebers 10 so eingestellt, dass sie beim Abfließen das Abstiegsrohr 8 nicht vollständig ausfüllt. Die Rohrquerschnitte sind so gewählt, dass auch bei höchstem Wasserdruck der Schieber nur so weit schließt, dass Aale ihn passieren können und dann durch das Abstiegsrohr 8 weiter schwimmen. Der Regler R wertet dabei die Differenz der Wasserdrücke in dem Druckrohr 9 und dem Saugrohr 6 aus. Der Druck im Saugrohr 6 wird auch mit der Wassersäule im daran angeschlossenen Schaurohr 7 angezeigt.

Das Abstiegsrohr 8 durchquert das Becken für die Aufstiegskontrolle 22. In diese gelangen die Fische, die durch den Rohrstollen 4 aufsteigen und weiter durch die Mäanderbecken 25 den Turm 2 aufsteigen.

In Fig. 4 ist der Querschnitt des Rohrstollens 4 gezeigt. Unten liegt das Abstiegsrohr 8 in dem das Wasser nur bis zur Höhe WS4 fließt. Das Abstiegsrohr 8 ist hier doppelt dargestellt, da es bei dem Anschluss des Aquäduktes entsprechend nach unten abfällt. Über dem Abstiegsrohr 8 liegt die Benthosschicht 29. Das Wasser im Rohrstollen 4 steht bis zur Höhe WS3. Der Rohrstollen 4 ist also, wie das Abstiegsrohr 3, nicht voll gefüllt.

In der Fig. 5 ist ein Aquädukt 5 in Schrägansicht gezeigt. In dem Kasten aus Kunststoff bohlen 28 sind auf dem Boden die Mäanderbecken 25 und die Benthosschicht 29 eingebaut. Das Wasser reicht bis zur Höhe WS3. Unter dem Boden ist das Abstiegsrohr 8 angebracht, in dem das Wasser bis zur Höhe WS4 steht.

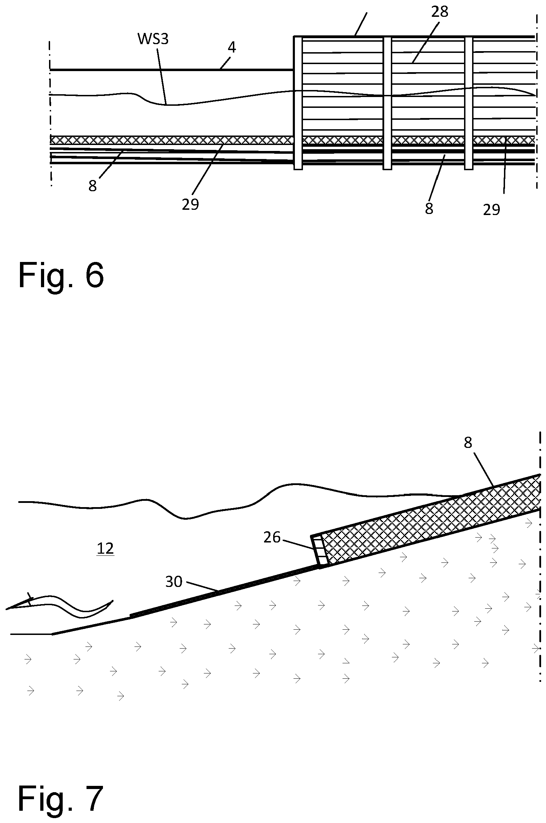

Fig. 6 zeigt einen Schnitt durch die Verbindung des Rohrstollens 4 mit dem Aquädukt 5, das aus einem Kasten mit den Kunststoff bohlen 28 gebildet ist. Die Verbindung ist hier waagerecht dargestellt. Sie weist aber typischerweise ein Gefälle von 7% auf.

Die Höhen sind so gewählt, dass die Benthosschicht 29 durchgehend ist. Auch der Wasserstand WS3 ist gleichbleibend. Das Abstiegsrohr 8 passt sich mit einem Gefälle im Rohrstollen so an, dass es direkt auf das Abstiegsrohr 8 im Aquädukt trifft.

In Fig. 7 ist gezeigt, wie das Abstiegsrohr 8 im Unterwasser 12 endet. Es ist mit einem Absperr-Lochblech 30 versehen, durch das die Aale ausschwimmen können. Das Wasser läuft auf dem Auslaufblech 30 aus, damit der Boden nicht ausgespült wird.

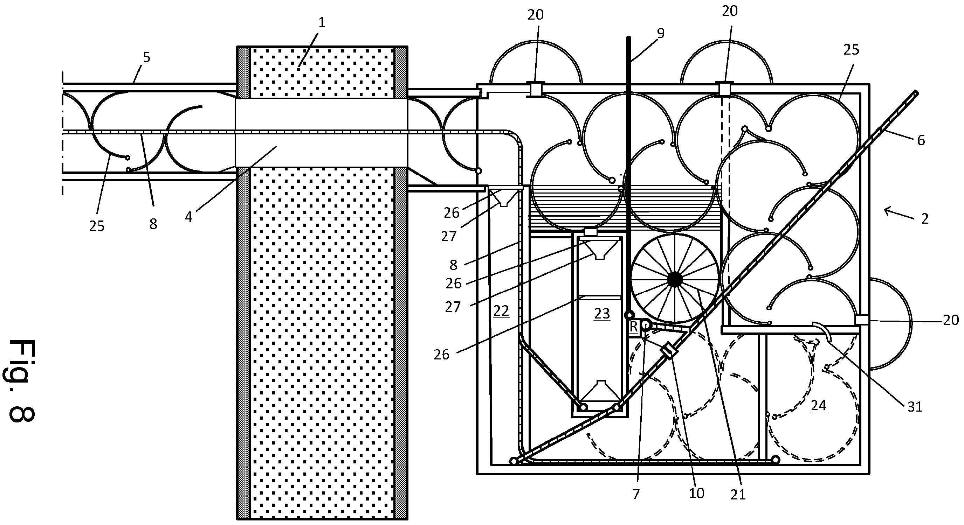

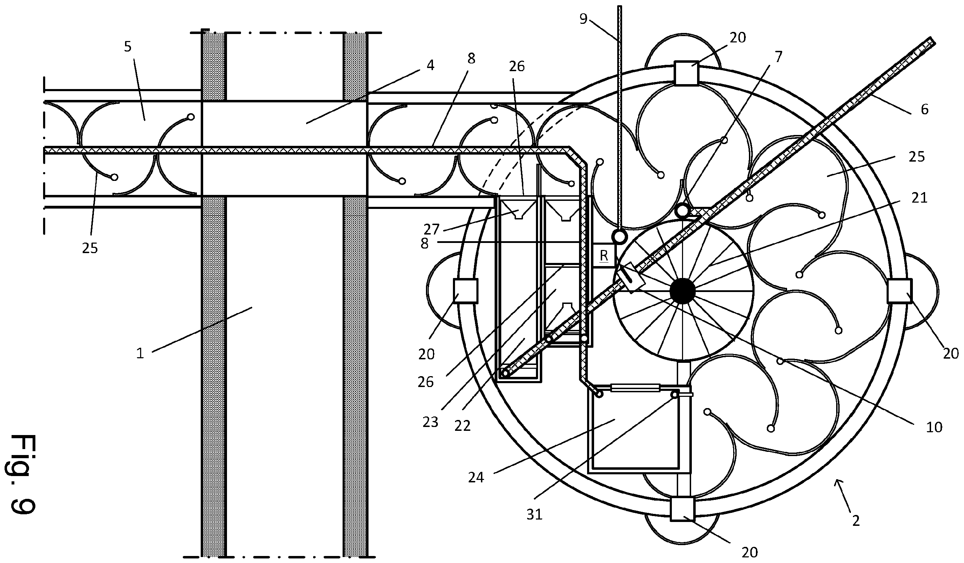

In Fig. 8 und 9 sind jeweils der untere Boden eines wasserseitigen Turms 2 mit seinen Einbauten dargestellt. An den Wänden des Turms 2 sind die Passagen des Fischpasses mit ihren Mäanderbecken 25 aufgestellt, die die Wendelpassagen um das Treppenhaus 21 herum bis zu dem Rohrstollen 4 durch die Sperrmauer 1 bilden.

In der Variante gemäß Fig. 8 ist der Turm rechteckig und an jeder Wand sind fünf Mäanderbecken 25 aufgestellt. Über den Mäanderbecken nahe dem Treppenhaus ist ein Gitterrost aufgestellt, von dem aus Wartungsarbeiten an den Mäanderbecken vorgenommen werden können.

In der Variante gemäß Fig. 9 ist der Turm rund und in einer kompletten Spirale sind sechzehn Mäanderbecken 25 aufgestellt. Alle Mäanderbecken sind direkt vom Treppenhaus 21 erreichbar.

Die unterste Wendelpassage geht in den Rohrstollen 4 und dieser in den Aquädukt 5 über, der ebenfalls mit Mäanderbecken 25 besetzt ist. In die Passagen des Fischpasses können die Fische entsprechend dem Wasserstand über geöffnete Ventile 20 ein- und ausschwimmen. Über eingebaute Absperr-Lochbleche 26 und Kehlfänger 27 können die Fische in die Abstiegskontrolle 23 gelangen und dort der Erfolg des Abstiegs überprüft werden.

Aufsteigende Fische kommen über den Aquädukt 5 und den Rohstollen in den Turm 2 hinein und können auf gleiche Art in der Aufstiegskontrolle 22 überprüft werden.

Das Saugrohr 6 kommt vom Grund des Stausees und ist durch den Schieber 10 bis zur Abstiegskontrolle 23 geführt. An das Saugrohr 6 ist vor dem Schieber 10 das Schaurohr 7 angeschlossen, das den Wasserdruck im Saugrohr 6 anzeigt und den Wert des Wasserdruckes an den Regler R gibt. An den Regler R ist auch das Druckrohr 9 angeschlossen, das auch bis zum Grund des Stausees führt. Der Druck im Druckrohr 7 ist zu dem Wasserstand im Stausee proportional. Anhand der Differenz der Drücke in dem Druckrohr 9 und dem Saugrohr 6 regelt der Regler die Öffnung des Schiebers 10.

Absteigende katadrome Aale gelangen so mittels des Saugdrucks im Saugrohr 6 in die Abstiegskontrolle 23. Von dort schwimmen sie in das Abstiegsrohr 8, das in den Rohrstollen 4 und den Aquädukt 5 weiterführt und letztlich im Unterwasser 12 endet. Ein verlängerter Strang des Saugrohres 6 kann auch das Becken für die Aufstiegskontrolle 22 mit Wasser versorgen.

Auf dem Boden des wasserseitigen Turms kann auch ein Aquarium 24 eingebaut sein. Es erhält sein Wasser aus dem Zulauf 31 und lässt dieses wieder in einen Strang des Abstiegsrohres 8 ab. In diesem Aquarium können besondere Fische, die im Fischpass gefunden wurden, temporär gehalten und gezeigt werden.

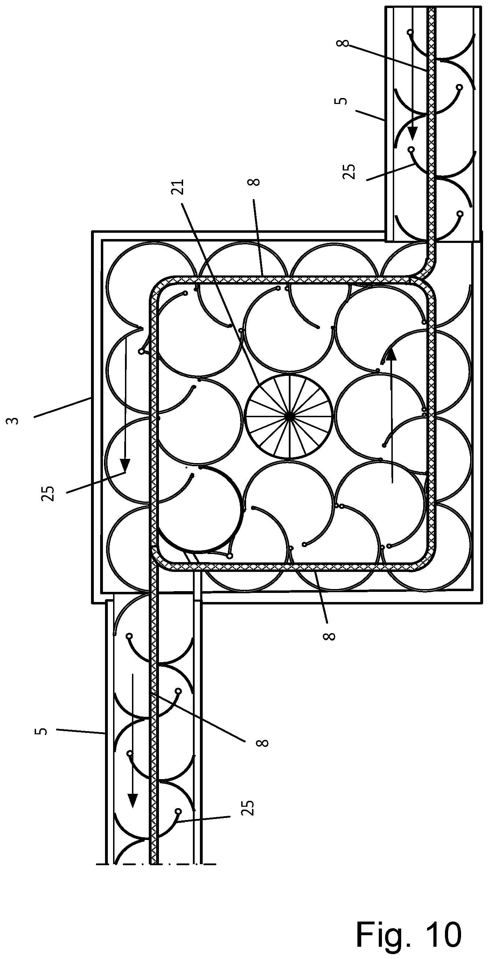

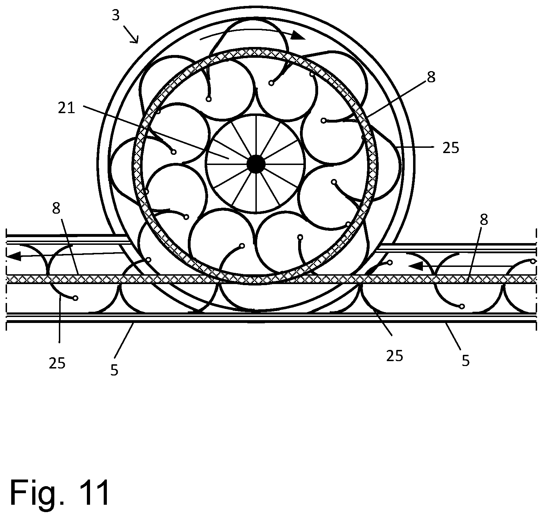

In Fig. 10 und 11 sind jeweils eine Spirale der Mäanderpassagen eines luftseitigen Turms 3 um das Treppenhaus 21 dargestellt. An der obersten Spirale kommt ein Aquädukt 5 mit seinen Mäanderbecken 25 an und an der untersten Spirale führt ein Aquädukt 5 mit seinen Mäanderbecken 25 weiter. Der Wasserdurchfluss ist mit Pfeilen angedeutet.

An den Wänden des Turms 2 sind die Passagen des Fischpasses mit ihren Mäanderbecken 25 aufgestellt. Dabei sind in der Variante eines rechteckigen Turms 3 gemäß Fig. 10 in einer Spirale zwanzig Mäanderbecken 25 aufgestellt. In der Variante des runden Turms 3 gemäß Fig 11 sind sechzehn Mäanderbecken 25 aufgestellt. Das Abstiegsrohr 8 ist unter den Aquädukten 5 geführt und ebenso auch unter den jeweiligen Spiralen des Turmfischpasses. Die katadromen Aale schwimmen damit den direkten Weg und machen nicht die vielen Windungen des Mäanderfischpasses mit. Damit werden auch Probleme mit dem Gegenverkehr der aufsteigenden Fische bei den Schlitzpforten des Mäanderfischpasses vermieden.

### Bezugszeichenliste

- 1: Sperrmauer
- 2: wasserseitiger Turm
- 3: luftseitiger Turm
- 4: Rohrstollen
- 5: Aquädukt
- 6: Saugrohr
- 7: Schaurohr
- 8: Abstiegsrohr
- 9: Druckrohr
- 10: Schieber
- 11: Oberwasser
- 12: Unterwasser
- 13: Hochwasserüberlauf
- 14: Uferlinie
- 15: Kraftwerk
- 16: Rechenanlage
- 17: Turmzugang
- 18: Auslauffischpass
- 19: Ende des Abstiegsrohrs
- 20: Einlassventil
- 21: Treppenhaus
- 22: Aufstiegskontrolle
- 23: Abstiegskontrolle
- 24: Aquarium
- 25: Mäanderbecken
- 26: Absperr-Lochblech
- 27: Kehlfänger
- 28: Kunststoffbohlen
- 29: Benthosschicht
- 30: Auslaufblech
- 31: Zulauf zum Aquarium
- R: Regeleinheit
- WS1: Höchster Wasserstand im Stausee
- WS2: Niedrigster Wasserstand im Stausee
- WS3: Wasserstand im Rohrstollen
- WS4: Wasserstand im Abstiegsrohr

## Patentansprüche

1. Fischpass zur Überwindung einer Stauhöhe an einer Sperrmauer (1) einer Talsperre mit einem oberseitigen Wasser-Zulauf und einem unterseitigen Wasser-Ablauf und mit dazwischen liegenden, im Wesentlichen in einer Gefällerichtung hintereinander wechselseitig angeordneten Becken, die zusammen eine oder mehrere wasserdurchgängige, mäanderförmige Passagen mit Durchflussschlitzen bilden, wobei die Passagen wendelförmig in einem wasserseitigen Turm (2) angeordnet sind und zu verschiedenen Höhen der Wendel sind jeweils zwei Öffnungen mit Ventilen (20) vorhanden, die miteinander über eine Regelung (R) kommunizieren, und es sind auf Befehl der Regelung (R) bei jedem Wasserstand, bis auf den niedrigsten Niederwasserstand (WS2), bei dem kein Fischwechsel mehr stattfindet, diese Ventile (20) so ausgleichend geregelt, dass die gewünschte Durchflussmenge durch den Fischpass erreicht wird, und die darunterliegenden Öffnungen jeweils durch das zugehörige Ventil (20) verschlossen sind, und an der untersten Passage ein Rohrstollen (4) angeschlossen ist, der durch die Sperrmauer (1) mit einem Aquädukt (5) zu einem oder mehreren hintereinander angeordneten Turm-Fischpässen (3) auf der Luftseite der Sperrmauer (1) führt, und der unterste das abfließende Wasser des gesamten Fischpasses bis in das Unterwasser (12) führt, **dadurch gekennzeichnet, dass** von dem Grund des Oberwassers (11) vor der Sperrmauer (1) ein Saugrohr (6) Wasser zu einer Abstiegskontrolle (23) an der untersten Passage des wasserseitigen Turms (2) führt, und dieses Wasser weiter durch ein Abstiegsrohr (8) im Rohrstollen (4) und dem Aquädukt (5) zu den luftseitigen Fischpässen und parallel zu deren Passagen bis in das Unterwasser (12) führt, wobei die durch das Abstiegsrohr (8) fließende Wassermenge durch einen Schieber (10) vor dem Kontrollbecken so geregelt ist, dass das Abstiegsrohr bei allen vorkommenden Wasserständen des Oberwassers nicht vollständig mit Wasser gefüllt ist und ein gleichbleibendes Strömungsregime für die abwandernde katadrome Fauna gewährleistet.

2. Fischpass nach Anspruch 1, **dadurch gekennzeichnet, dass** der Regler (R), der die Steuerung der Schließvorgänge der Ventile (20) vor den Öffnungen der Wendel vornimmt, den Wasserdruck in einem Druckrohr (9) auswertet, das bis an den Grund des Stausees reicht.

3. Fischpass nach Anspruch 2, **dadurch gekennzeichnet, dass** der Regler (R) den Schieber (10) durch die Differenz des Wasserdrucks in einem senkrechten Schaurohr (7), das an das Saugrohr (6) angeschlossen ist, und dem Druck des Seewasserstandes im Druckrohr (9) regelt.

4. Fischpass nach Anspruch 3, **dadurch gekennzeichnet, dass** das Schaurohr (7) durchsichtig und parallel zu dem Treppenhaus (21) geführt ist, und somit der Wasserdruck im Schaurohr (7) optisch überprüfbar ist.

5. Fischpass nach Anspruch 3, **dadurch gekennzeichnet, dass** die Querschnitte des Saugrohres (6) und des Abstiegsrohres (8) so gewählt sind, dass auch bei einem höchsten Wasserstand (WS1) der Schieber (10) nur so weit geöffnet bleibt, dass Aale ihn passieren können.

6. Fischpass nach Anspruch 3, **dadurch gekennzeichnet, dass** der Schieber (10) das Saugrohr (6) bei einem Ausfall des Reglers (R) automatisch verschließt.

7. Fischpass nach Anspruch 3, **dadurch gekennzeichnet, dass** der Schieber (10) und die Kontrollbecken (22, 23) auf dem Boden des wasserseitigen Turms (2) eingebaut sind.

8. Fischpass nach Anspruch 1, **dadurch gekennzeichnet, dass** der Querschnitt des Abstiegsrohres (8) größer ist als der Querschnitt des Saugrohres (6) und damit auch bei voll geöffnetem Saugrohr das gleichbleibende Strömungsregime im Abstiegsrohr (8) gewährleistet ist.

9. Fischpass nach Anspruch 8, **dadurch gekennzeichnet, dass** das Abstiegsrohr (8) auf dem Grund des Rohrstollens (4) liegt und sich darüber eine Benthosschicht (29) als künstliches Interstitial befindet.

10. Fischpass nach Anspruch 1, **dadurch gekennzeichnet, dass** das Abstiegsrohr (8) auf der Luftseite der Sperrmauer (1) unter den Passagen der luftseitigen Fischpässe geführt ist.

11. Fischpass nach Anspruch 10, **dadurch gekennzeichnet, dass** das Abstiegsrohr (8) auf dem Grund des Unterwassers (12) und damit als Zusatzdotation zum Mäanderfischpass dient.

12. Fischpass nach Anspruch 1, **dadurch gekennzeichnet, dass** die Passagen in dem wasserseitigen Turm (2) als runde spiralförmige Wendelpassagen in Mäandertechnologie ausgeführt sind.

## Claims

1. Fish passage for overcoming a barrage height on a barrage (1) of a dam having a water inlet on the upper side and a water outlet on the lower side and having basins that lie between the upper side and lower side and that are arranged essentially alternately one behind the other in a slope direction and said basins together form one or more meandering passages which allow the passage of water and have through-flow slots, wherein the passages are arranged in a helical manner in a water-side tower (2) and provided at different heights of the helix are in each case two openings that have valves (20) and communicate with one another via a regulator (R), and at the command of the regulator (R), at every water level, except for the lowest low water level (WS2), at which there is no longer any exchange of fish, these valves (20) are regulated in a compensating manner so that the desired flow rate through the fish passage is achieved, and the openings that lie below are each closed by means of the associated valve (20), and a pipe tunnel (4) is connected to the lowermost passage and leads through the barrage (1) having an aqueduct (5) to one or more tower fish passages (3) that are arranged one behind the other on the air side of the barrage (1), and the lowermost tower fish passage leads the outflowing water of the entire fish passage down into the underwater (12), **characterised in that**, from the bottom of the upstream water (11) upstream of the barrage (1), a suction pipe (6) leads water to a descent control (23) at the lowest passage of the water-side tower (2), and this water continues through a descent pipe (8) in the pipe tunnel (4) and the aqueduct (5) to the air-side fish passages and parallel to their passages down into the underwater (12), wherein the amount of water that is flowing through the descent pipe (8) is regulated by a slide (10) upstream of the control basin so that the descent pipe is not completely filled with water at all water levels that occur in the upstream water and it ensures a constant flow regime for the migrating catadromous fauna.

2. Fish passage according to claim 1, **characterised in that** the regulator (R), which performs the control of the closing processes of the valves (20) upstream of the openings of the helix, evaluates the water pressure in a pressure tube (9) which reaches as far as the bottom of the reservoir.

3. Fish passage according to claim 2, **characterised in that** the regulator (R) controls the slide (10) by means of the difference between the water pressure in a perpendicular viewing tube (7), which is connected to the suction tube (6), and the pressure of the seawater level in the pressure tube (9).

4. Fish passage according to claim 3, **characterised in that** the viewing tube (7) is transparent and guided in a manner parallel to the stairwell (21), and the water pressure in the viewing tube (7) can thus be visually checked.

5. Fish passage according to claim 3, **characterised in that** the cross sections of the suction tube (6) and of the descent tube (8) are selected so that, even at a highest water level (WS1), the slide (10) remains open only to such an extent that eels can pass through it.

6. Fish passage according to claim 3, **characterised in that** the slide (10) automatically closes the suction tube (6) in the event of a failure of the regulator (R).

7. Fish passage according to claim 3, **characterised in that** the slide (10) and the control basins (22, 23) are installed on the floor of the water-side tower (2).

8. Fish passage according to claim 1, **characterised in that** the cross section of the descent tube (8) is larger than the cross section of the suction tube (6), and the constant flow regime in the descent tube (8) is thus ensured even when the suction tube is fully open.

9. Fish passage according to claim 8, **characterised in that** the descent tube (8) lies on the bottom of the tube tunnel (4) and a benthic layer (29) as an artificial interstitial is located above the descent tube.

10. Fish passage according to claim 1, **characterised in that** the descent tube (8) is guided on the air side of the barrage (1) under the passages of the air-side fish passages.

11. Fish passage according to claim 10, **characterised in that** the descent tube (8) is used on the bottom of the underwater (12) and thus as an additional addition to the meander fish passage.

12. Fish passage according to claim 1, **characterised in that** the passages in the water-side tower (2) are designed as round spiral helical passages using meander technology.

## Revendications

1. Passe à poissons pour le franchissement d'une hauteur de retenue d'une digue (1) d'un barrage avec une entrée d'eau supérieure et une sortie d'eau inférieure et entre lesquelles sont intercalés des bassins agencés alternativement les uns derrière les autres sensiblement dans le sens de la pente et formant ensemble un ou plusieurs passages en méandre traversables par l'eau avec des fentes de passage, dans laquelle les passages sont agencés en hélice dans une tour côté eau (2) et deux ouvertures avec des vannes (20) sont respectivement présentes à différentes hauteurs de l'hélice, lesquelles ouvertures communiquent entre elles par l'intermédiaire d'un dispositif de régulation (R) et, à chaque niveau d'eau, sur commande du dispositif de régulation (R), jusqu'au niveau d'eau le plus bas (WS2) auquel aucun échange de poisson n'a plus lieu, ces vannes (20) sont régulées de manière équilibrée de telle sorte que le débit souhaité est obtenu à travers la passe à poissons, et les ouvertures situées en dessous sont respectivement fermées par la vanne (20) associée, et au niveau du passage le plus bas est raccordé un tunnel tubulaire (4) qui conduit à travers la digue (1) avec un aqueduc (5) jusqu'à une ou plusieurs passes à poissons (3) agencées les unes derrière les autres côté air de la digue (1) et le passage le plus bas guide l'eau qui s'écoule de toute la passe à poissons jusqu'à l'eau en aval (12), **caractérisée en ce qu'**à partir du fond de l'eau en amont (11) avant la digue (1), un tuyau d'aspiration (6) conduit l'eau jusqu'à un dispositif de contrôle de descente (23) sur le passage le plus bas de la tour côté eau (2) et cette eau poursuit son écoulement à travers un tuyau de descente (8) dans le tunnel tubulaire (4) et dans l'aqueduc (5) jusqu'à la passe à poissons côté air et parallèlement à leurs passages jusqu'à l'eau en aval (12), dans laquelle la quantité d'eau qui s'écoule à travers le tuyau de descente (8) est régulée par une trappe (10) avant le bassin de contrôle, de telle sorte que le tuyau de descente n'est pas entièrement rempli d'eau à tous les niveaux d'eau existants de l'eau en amont et assure un régime d'écoulement constant pour la faune catadrome migrante.

2. Passe à poissons selon la revendication 1, **caractérisée en ce que** le dispositif de régulation (R) qui assure la commande des opérations de fermeture des vannes (20) devant les ouvertures de l'hélice, évalue la pression de l'eau dans un tuyau sous pression (9) qui s'étend jusqu'au fond du lac de retenue.

3. Passe à poissons selon la revendication 2, **caractérisée en ce que** le dispositif de régulation (R) règle la trappe (10) par la différence entre la pression d'eau dans un tuyau d'inspection vertical (7) qui est raccordé au tuyau d'aspiration (6), et la pression du niveau d'eau de lac dans le tuyau sous pression (9).

4. Passe à poissons selon la revendication 3, **caractérisée en ce que** le tuyau d'inspection (7) est transparent et guidé en parallèle à la cage d'escalier (21), et la pression d'eau dans le tuyau d'inspection (7) peut ainsi être contrôlée optiquement.

5. Passe à poissons selon la revendication 3, **caractérisée en ce que** les sections transversales du tuyau d'aspiration (6) et du tuyau de descente (8) sont choisies de telle sorte que même à un niveau d'eau le plus élevé (WS1), la trappe (10) reste suffisamment ouverte pour que les anguilles puissent la franchir.

6. Passe à poissons selon la revendication 3, **caractérisée en ce que** la trappe (10) ferme automatiquement le tuyau d'aspiration (6) en cas de défaillance du dispositif de régulation (R).

7. Passe à poissons selon la revendication 3, **caractérisée en ce que** la trappe (10) et les bassins de contrôle (22, 23) sont installés sur le fond de la tour côté eau (2).

8. Passe à poissons selon la revendication 1, **caractérisée en ce que** la section transversale du tuyau de descente (8) est plus grande que la section transversale du tuyau d'aspiration (6) et le régime d'écoulement constant dans le tuyau de descente (8) est ainsi assuré même lorsque le tuyau d'aspiration est entièrement ouvert.

9. Passe à poissons selon la revendication 8, **caractérisée en ce que** le tuyau de descente (8) est situé sur le fond du tunnel tubulaire (4) et une couche benthique (29) faisant office d'interstitiel artificiel se situe au-dessus de celui-ci.

10. Passe à poissons selon la revendication 1, **caractérisée en ce que** le tuyau de descente (8) est guidé côté air de la digue (1) sous les passages de la passe à poissons côté air.

11. Passe à poissons selon la revendication 10, **caractérisée en ce que** le tuyau de descente (8) est situé sur le fond de l'eau en aval (12) et sert ainsi d'équipement supplémentaire à la passe à poissons à méandres.

12. Passe à poissons selon la revendication 1, **caractérisée en ce que** les passages dans la tour côté eau (2) sont réalisés sous forme de passages ronds en spirale en utilisant la technique des méandres.
